# DEMANDE DE BREVET EUROPEEN

(11) **EP 2 236 356 A2**
(43) Date de publication de la demande: **06.10.2010**
(21) Numéro de dépôt: 10305117.3
(22) Date de dépôt: 04.02.2010
(51) Int. Cl.: B60R 5/04

(54) **Accessoire de rangement utilisable comme tapis de coffre pour un véhicule automobile**

(30) Priorité: 03.04.2009 FR 0952176
(71) Demandeur: Renault S.A.S., 92100 Boulogne-Billancourt (FR)
(72) Inventeur: Hewak, Gregor, 95490, VAUREAL (FR); Rouquier, Martine, 78720, La Celle les Bordes (FR)

(57) **Abrégé**

L'invention concerne un accessoire de rangement adapté au maintien d'objets en mouvement, notamment dans un coffre de véhicule automobile, et comprenant une structure (1) offrant une surface de rangement (R).

La structure (1) de l'invention comprend un cadre (11) et un ensemble de lamelles (12) parallèles, reliées au cadre, et séparées par des interstices (2) de largeur sensiblement constante, chaque lamelle (12) étant orientée sur chant dans la surface de rangement (R) de manière à se présenter comme rigide pour toute force appliquée transversalement à cette surface de rangement, et à se présenter comme flexible pour toute force appliquée dans cette surface transversalement à la longueur de cette lamelle.

## Description

L'invention concerne, de façon générale, les techniques d'arrimage et d'optimisation des espaces de rangement.

Plus précisément, l'invention concerne un accessoire de rangement adapté au maintien d'objets en mouvement, notamment dans un coffre de véhicule automobile, cet accessoire comprenant au moins une structure offrant une surface de rangement affleurant à un plan tangent.

Lorsque des objets lourds ou non susceptibles d'être confinés dans un espace clos doivent être transportés, il est généralement indispensable de les arrimer par des moyens de fixation spécifiquement choisis en fonction de leur forme externe et/ou de la position des points d'ancrage dont ils sont éventuellement dotés.

Dans le cas d'objets relativement nombreux et/ou compacts, la solution généralement adoptée consiste à les enfermer dans un espace clos, par exemple dans un coffre de véhicule automobile.

Dans ce cas, qui exclut la perte accidentelle de ces objets pendant leur transport, il est fréquent de ne prendre que des mesures très élémentaires pour assurer le maintien des objets transportés, par exemple en plaçant ces objets dans une boîte elle-même disposée dans le coffre du moyen de transport.

Cette solution n'est toutefois pas totalement satisfaisante dans la mesure où les accélérations subies par les objets transportés tendent à déplacer ces objets qui peuvent ainsi se renverser ou s'éparpiller dans l'espace de rangement, par exemple dans le coffre d'un véhicule automobile.

Dans ce contexte, la présente invention a pour but de proposer un accessoire de rangement qui, bien que non spécifiquement dédié à une classe particulière d'objets à transporter, permette d'éviter ou de limiter les inconvénients décrits ci-dessus.

A cette fin, l'accessoire de rangement de l'invention, par ailleurs conforme à la définition générique qu'en donne le préambule ci-dessus, est essentiellement caractérisé en ce que la structure (1) comprend un cadre et un ensemble de lamelles orientées suivant une direction commune et en ce que les lamelles sont séparées par des interstices et dotées d'une liberté de débattement transversal.

De manière avantageuse, chaque lamelle s'étend, suivant sa longueur et dans cette direction commune, entre deux extrémités par lesquelles cette lamelle est reliée au cadre.

Avantageusement, les lamelles forment des paires de lamelles voisines entre lesquelles des objets peuvent être insérés, les lamelles de chaque paire étant, sur toute leur longueur, séparées l'une de l'autre par un interstice de largeur sensiblement constante.

De même, chaque lamelle est orientée sur chant dans la surface de rangement et présente dans cette surface une largeur sensiblement constante sur toute la longueur de cette lamelle, et en ce que chaque lamelle présente, perpendiculairement au plan tangent, une hauteur au moins égale au double de sa largeur, et, vis-à-vis d'une force appliquée transversalement au plan tangent, une raideur au moins égale au triple de la raideur qu'elle présente vis-à-vis d'une force appliquée dans le plan tangent transversalement à sa longueur.

Grâce à cet agencement, non seulement la pression exercée par un objet transporté sur le chant de chaque lamelle, supérieure à celle qui serait exercée sur une surface lisse, participe au maintien de cet objet, mais en outre la flexibilité que présentent les lamelles transversalement à leur longueur permet d'envisager l'insertion au moins partielle des objets transportés, qui se trouvent ainsi maintenus de façon très efficace.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un accessoire de rangement conforme à l'invention ;
- la figure 2 est une vue partielle en perspective de l'accessoire de rangement illustré à la figure 1 et doté d'un peigne amovible temporairement rangé dans une rive du cadre ;
- la figure 3 est une vue en coupe et en élévation d'un accessoire de rangement conforme à l'invention, cet accessoire maintenant deux objets différents et étant représenté en l'absence de peigne ;
- la figure 4 est une vue en coupe et en élévation de l'accessoire de rangement illustré à la figure 3, représenté sans objet et avec un peigne ;
- la figure 5 est une vue à échelle agrandie d'un détail visible sur la figure 3 ;
- la figure 6 est une vue à échelle agrandie d'un détail visible sur la figure 4 ; et
- la figure 7 est une vue en perspective éclatée d'un accessoire tel qu'illustré à la figure 1 et doté en outre d'un support.

Comme annoncé précédemment, l'invention concerne un accessoire de rangement adapté au maintien d'objets en mouvement, l'accessoire illustré étant plus particulièrement destiné à être utilisé, de façon privilégiée, en tant que tapis ou étagère dans un coffre de véhicule automobile.

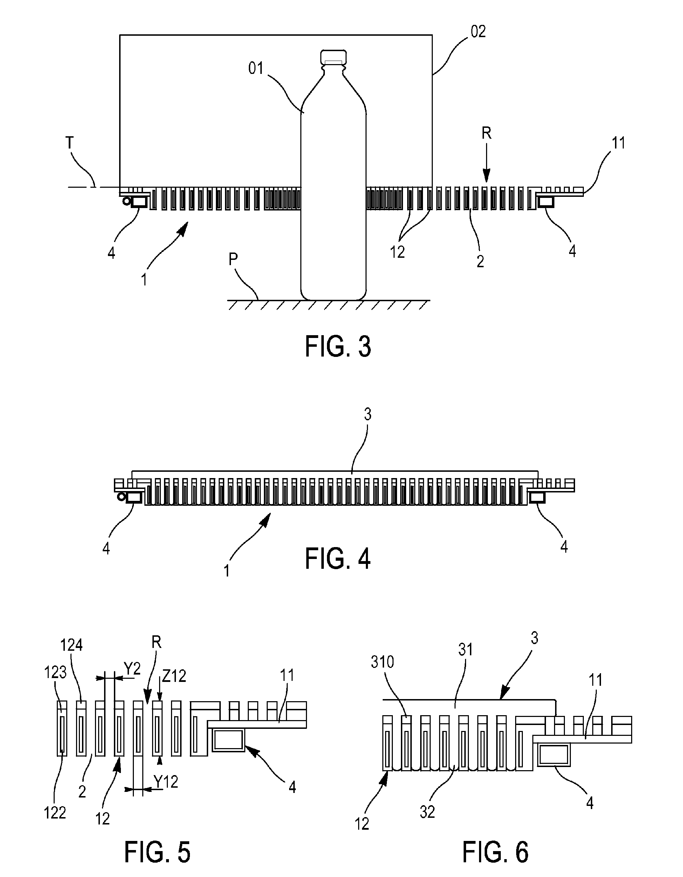

Cet accessoire comprend une structure 1 qui, comme le montre notamment la figure 3, offre une surface de rangement R affleurant à un plan tangent T.

Cette structure 1 comprend un cadre 11 et un ensemble de lamelles 12, le cadre étant par exemple composé de quatre côtés rigides mutuellement orthogonaux et dont deux côtés opposés forment des rives 110 de plus grande largeur.

Les lamelles 12 s'étendent, suivant leur longueur X12, dans une même direction X et sont reliées, par leurs extrémités respectives 120, à deux bords opposés du cadre 11, par exemple aux rives 110.

Les lamelles 12 de chaque paire de lamelles voisines sont séparées l'une de l'autre, sur toute leur longueur X12, par un interstice 2 de largeur Y2 sensiblement constante.

Chaque lamelle 12 est orientée sur chant dans la surface de rangement R et présente elle-même, dans cette surface, une largeur Y12 sensiblement constante sur toute la longueur X12 de cette lamelle 12.

Par ailleurs, et comme le montre par exemple la figure 5, chaque lamelle 12 présente, perpendiculairement au plan T tangent à la surface de rangement R, une hauteur Z12 au moins égale au double de sa largeur Y12, et, par exemple, de l'ordre de 4 à 7 fois la largeur Y12.

Grâce à ce dimensionnement, chaque lamelle 12 se comporte comme étant rigide vis-à-vis d'un effort d'intensité prédéfinie, appliqué transversalement au plan tangent T, et comme étant flexible vis-à-vis d'un effort de même intensité mais appliqué dans le plan tangent T, transversalement à la longueur X12 de cette lamelle.

En d'autres termes et de façon plus précise, chaque lamelle 12 présente, vis-à-vis d'une force appliquée transversalement au plan tangent T, une raideur au moins égale au triple, et de préférence au moins égale au décuple, de la raideur qu'elle présente vis-à-vis d'une force appliquée dans le plan tangent T transversalement à sa longueur X12.

Pour augmenter ce rapport de raideurs, chaque lamelle 12 peut présenter (figures 5 et 6) une âme métallique 122 recouverte par moulage d'un enrobage 123 de matériau polymère.

Par ailleurs, et pour éviter le glissement des objets posés sur la structure 1, chaque lamelle 12 peut être recouverte, du côté de la surface de rangement R, d'un matériau déformable à forte adhérence 124.

D'une façon générale, ledit matériau déformable peut prendre une multitude de formes possibles, notamment selon les besoins de l'accroche, à savoir en forme de V, de W, de points, de pointes, de bulles, de billes, etc.

La structure 1 peut être posée à même le plancher du coffre et servir ainsi de tapis de coffre.

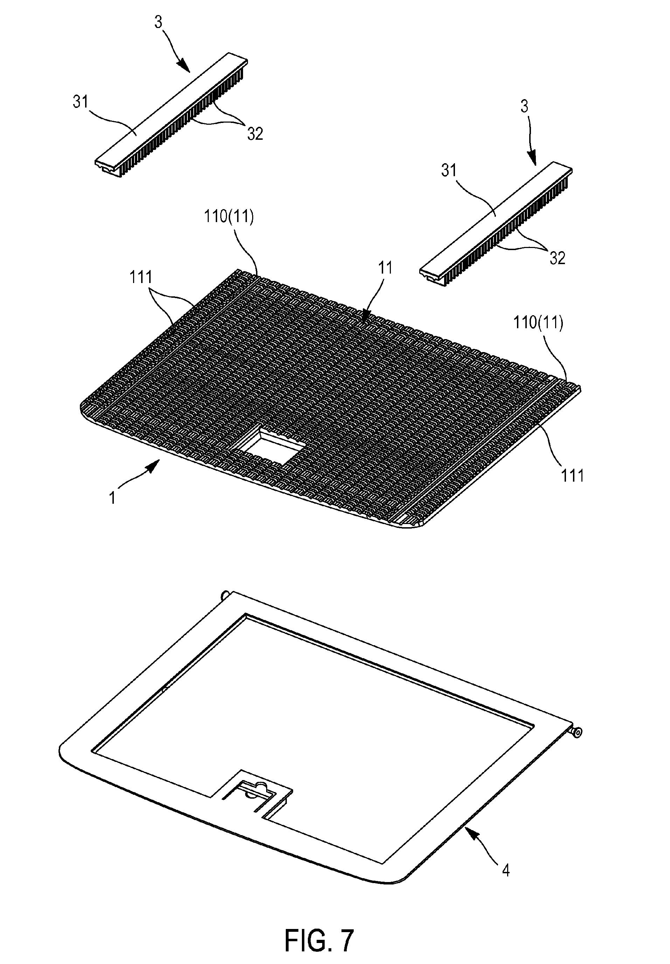

Néanmoins, l'accessoire de rangement de l'invention peut aussi comprendre, en plus de cette structure, un support évidé 4 (figure 7) susceptible de s'accrocher dans une position surélevée, et sur lequel la structure 1 peut prendre appui par sa périphérie, auquel cas cette structure 1 peut elle-même être surélevée par rapport au plancher P du coffre, comme le montre la figure 3.

Dans ce cas, il est judicieux de prévoir que la largeur Y2 de chaque interstice 2 soit comprise entre 80% et 120% de la largeur Y12 de chaque lamelle 12.

Grâce à la flexibilité des lamelles 12 et à la liberté de débattement transversal qu'offrent à ces lamelles des interstices 2 ainsi dimensionnés, des objets peuvent être insérés entre deux lamelles voisines, comme le montre l'exemple de la bouteille 01 sur la figure 3, alors même qu'un autre objet 02 est posé sur la surface R.

L'accessoire de l'invention peut aussi avantageusement comprendre un ou plusieurs peignes 3.

Chaque peigne 3 (figures 4, 6, et 7) est essentiellement formé d'une réglette 31 et de dents 32 portées par la face interne 310 de la réglette 31.

Les dents 32 sont parallèles entre elles et s'étendent transversalement à la longueur de la réglette 31.

Ce peigne 3 est dimensionné pour pouvoir adopter, le long des lamelles 12 et perpendiculairement à elles, une pluralité de positions actives de maintien dans chacune desquelles les dents 32 du peigne 3 sont introduites dans les interstices 2 entre les lamelles 12.

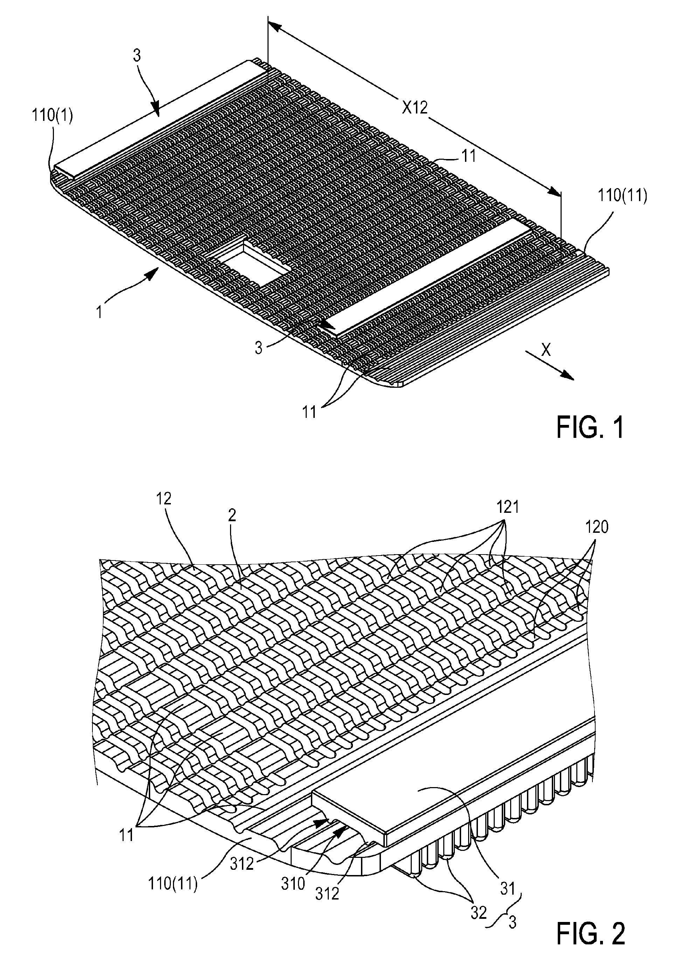

Par exemple, le peigne visible sur la droite sur la figure 1 est placé dans position active de maintien dans laquelle la réglette de ce peigne peut servir de butée latérale à un objet disposé sur la structure 1.

Pour écarter tout risque que cet objet puisse pousser le peigne 3 le long des lamelles 12, il peut être judicieux de prévoir que ces lamelles et le peigne coopèrent à leur maintien mutuel grâce à des reliefs respectifs complémentaires.

Dans le mode de réalisation illustré, les lamelles 12 présentent des reliefs 121 (figure 2), formés par un motif répété de façon périodique suivant leur longueur.

De son côté, la face interne 310 de la réglette 31 présente un ou plusieurs reliefs 312 disposés en regard de chaque lamelle 12 dans chaque position active de maintien du peigne 3.

Comme le montre la figure 2, chaque relief 312 est complémentaire du motif à partir duquel sont formés les reliefs 121 des lamelles, de sorte que chaque relief 312 du peigne 3 coopère, dans chaque position active de maintien, avec un relief correspondant 121 de chaque lamelle 12, et retient donc ce peigne 3 en translation dans le sens de la longueur X12 des lamelles 12.

Enfin, comme le montre la figure 7, une ou plusieurs rives 110 du cadre 11 de la structure 1 peuvent être percées de lumières 111 aux dimensions des dents 32 du peigne 3 pour permettre le rangement de ce peigne comme illustré à la figure 2.

Dans une application possible, le maintien des objets par l'accessoire est rendu optimal lorsque celui-ci est placé sur un plateau de coffre mobile. La hauteur de l'accessoire de rangement par rapport au plancher de coffre est alors augmentée de façon importante (suivant le déplacement en Z du plateau de coffre mobile sensiblement parallèle au siège arrière), ou alors placée à différentes hauteurs à l'aide d'empreintes situées sur les habillages de passages de roues.

La description ci-dessus décrit une version fixe des lamelles. Dans une variante de réalisation, les lamelles sont mobiles en coulissement le long des parois latérales du cadre et sont stockées dans un boîtier de rangement.

Dans une autre variante de réalisation, l'accessoire de rangement est rendu autonome, rangé par exemple dans une housse. Son utilisation est alors plus proche d'une sorte de filet à bagages. Déployé, il se fixe sur les habillages de passage de roues, par exemple par l'intermédiaire de crochets, d'encoches ou tout autre moyen de fixation rapide.

Dans une autre variante, les lamelles sont stockées dans les habillages de passage de roues, enroulées autour d'un axe (exemple enrouleur de ceinture) et munies d'indexations prédéfinies en Z. Ce mode a l'avantage de permettre l'utilisation d'un nombre limité de lamelles suivant le besoin.

D'une façon générale, le nombre, l'épaisseur, la hauteur et l'espacement des lamelles seront déterminés selon un cahier des charges répondant aux différents besoins existants suivant les utilisations demandées.

## Revendications

1. Accessoire de rangement adapté au maintien d'objets en mouvement, notamment dans un coffre de véhicule automobile, comprenant au moins une structure (1) offrant une surface de rangement (R) affleurant à un plan tangent (T), **caractérisé en ce que** la structure (1) comprend un cadre (11) et un ensemble de lamelles (12) orientées suivant une direction commune (X) et **en ce que** les lamelles sont séparées par des interstices (2) et dotées d'une liberté de débattement transversal.

2. Accessoire de rangement suivant la revendication 1, **caractérisé en ce que** chaque lamelle (12) s'étend, suivant sa longueur (X12) et dans cette direction commune (X), entre deux extrémités (120) par lesquelles cette lamelle (12) est reliée au cadre (11).

3. Accessoire de rangement suivant l'une des revendications 1 et 2, **caractérisé en ce que** les lamelles (12) forment des paires de lamelles voisines entre lesquelles des objets peuvent être insérés, les lamelles de chaque paire étant, sur toute leur longueur, séparées l'une de l'autre par un interstice (2) de largeur (Y2) sensiblement constante.

4. Accessoire de rangement suivant la revendication 3, **caractérisé en ce que** la largeur (Y2) de chaque interstice (2) est comprise entre 80% et 120% de la largeur (Y12) de chaque lamelle (12).

5. Accessoire de rangement suivant l'une quelconque des revendication 1 à 4, **caractérisé en ce que** chaque lamelle (12) est orientée sur chant dans la surface de rangement (R) et présente dans cette surface une largeur (Y12) sensiblement constante sur toute la longueur (X12) de cette lamelle (12), et **en ce que** chaque lamelle (12) présente, perpendiculairement au plan tangent (T), une hauteur (Z12) au moins égale au double de sa largeur (Y12), et, vis-à-vis d'une force appliquée transversalement au plan tangent (T), une raideur au moins égale au triple de la raideur qu'elle présente vis-à-vis d'une force appliquée dans le plan tangent (T) transversalement à sa longueur (X12).

6. Accessoire de rangement suivant l'une quelconque des revendications précédentes, **caractérisé en ce qu'**il comprend en outre au moins un peigne (3), comprenant une réglette (31) et des dents (32) parallèles entre elles et portées par une face interne (310) de la réglette (31), transversalement à la longueur de cette réglette, **et en ce que** ledit peigne (3) est dimensionné pour pouvoir adopter, le long des lamelles (12) et perpendiculairement à elles, une pluralité de positions actives de maintien dans chacune desquelles les dents (32) du peigne (3) sont introduites dans les interstices (2) entre les lamelles (12).

7. Accessoire de rangement suivant la revendication 6, **caractérisé en ce que** les lamelles (12) présentent des premiers reliefs (121) formés par un motif répété de façon périodique suivant leur longueur, **en ce que** la face interne (310) de la réglette (31) présente au moins un second relief (312) disposé en regard de chaque lamelle (12) dans chaque position active de maintien, **et en ce que** chaque second relief (312) est complémentaire du motif, ce dont il résulte que chaque second relief (312) coopère, dans chaque position active de maintien, avec un premier relief correspondant (121) de chaque lamelle (12) et retient ce peigne (3) en translation dans le sens de la longueur (X12) des lamelles (12).

8. Accessoire de rangement suivant l'une des revendications 6 et 7, **caractérisé en ce que** le cadre (11) de la structure (1) présente au moins une rive (110) percée de lumières (111) aux dimensions des dents (32) du peigne (3) et permettant le rangement du peigne (3).

9. Accessoire de rangement suivant l'une quelconque des revendications précédentes, **caractérisé en ce que** chaque lamelle (12) présente une âme métallique (122) recouverte par moulage d'un enrobage (123) de matériau polymère.

10. Accessoire de rangement suivant l'une quelconque des revendications précédentes, **caractérisé en ce que** chaque lamelle (12) est recouverte, du côté de la surface de rangement (R), d'un matériau déformable à forte adhérence (124).

11. Accessoire de rangement suivant l'une quelconque des revendications précédentes, **caractérisé en ce qu'**il comprend en outre un support évidé (4) sur lequel la structure (1) peut prendre appui par sa périphérie.
